# EUROPEAN PATENT APPLICATION

(11) **EP 0 989 101 A2**
(43) Date of publication of application: **29.03.2000**
(21) Application number: 99307431.9
(22) Date of filing: 20.09.1999
(51) Int. Cl.: C03B 23/025, C03B 23/03

(54) **Apparatus for producing bent glass sheets**

(30) Priority: 25.09.1998 GB 9820795
(71) Applicant: PILKINGTON UNITED KINGDOM LIMITED, St. Helens, Merseyside WA10 3TT (GB)
(72) Inventor: Woodward, Alan Charles, Winstanley, Wigan WN3 6DE (GB)
(74) Representative: Halliwell, Anthony Charles

(57) **Abstract**

The apparatus described is for producing bent glass sheets in increased quantities. It comprises adjacent first and second glass bending lines (1,2;21,22) each line including a furnace (3;23) a bending station (4;24) a cooling station (5;25,41) and conveying means (6;26). The bending process employed is one which subjects the glass sheet 11;31 to a bending force additional to the force of gravity The apparatus also comprises ancillary equipment (13,15;33,35) shared between the two lines, the lines being aligned in mutually spaced relationship, close enough to allow such sharing of ancillary equipment but far enough apart to allow operating personnel access between the lines. The apparatus is especially suited to bending glass sheets which are required in pairs, and the bent glass sheets may be used as windows for vehicles.

## Description

The present invention relates to the bending of glass sheets, and more especially to an improved apparatus for producing bent glass sheets in increased quantities. The bent glass sheets produced on this apparatus may be used as windows for vehicles, especially automotive vehicles. This apparatus is especially suited to bending glass sheets which are required in pairs.

Vehicle windows are normally composed of what is commonly termed "safety glass", i.e. glass which has a reduced capacity to cause injury on breakage. Such glass is generally toughened or laminated, and is manufactured by a glass supplier by processing flat annealed glass, generally float glass.

In addition to the safety aspect, there are various other requirements placed upon a bent glass sheet to be used as a vehicle window. For instance, the sheets must be of the correct size and shape. This applies not only to the perimeter of the sheet to ensure that the sheet fits into the aperture in the vehicle bodywork, but also to the whole of the three-dimensional major surfaces of the sheet, so that the curvature of the sheet matches or coordinates with that of the surrounding vehicle bodywork to suit the overall styling of the vehicle. Many modern vehicle designs require the glass to possess complex curvature, i.e. curvature in two directions at right-angles to each other (e.g. spherical curvature), as opposed to simple curvature, i.e. curvature in a single direction such as cylindrical curvature. Vehicle manufacturers impose tight tolerances on all these aspects of shape.

Moreover, the bent glass sheets must meet stringent optical requirements; not only must the viewing area of the sheets be free from surface imperfections such as marks, but very strict standards for optical distortion, such as striations, are also imposed. The bending apparatus employed by the glass supplier is therefore required to bend glass sheets to precise curvatures without introducing optical defects.

There is also a cost requirement imposed by the competitive commercial environment in which glass suppliers and their customers, the vehicle manufacturers, operate. Vehicle manufacturers frequently seek to reduce the prices paid for the bent glass sheets used to glaze their vehicles, with the effect that glass suppliers need to reduce the cost of production if they are to remain competitive.

Several factors are important to the production cost of bent glass sheets. Particularly significant is the cost of personnel, e.g. operators, and it is important that they are deployed efficiently. Another factor is the utilisation of the bending apparatus, i.e. the percentage of its intended production capacity at which it is actually operating. It is of course inefficient to run a bending line at less than full capacity. Stoppages, whether for planned maintenance or due to a breakdown, result in lost production which adds to costs. There is also the cost of equipment, not just the overall capital cost of the line, but also the cost of items such as bending moulds and shuttle rings which have to be changed for each different pattern of window made.

Now, it is normally the case that a vehicle's windows are symmetrical about its centreline. Consequently, most vehicles require two of each of the side windows (generally referred to as "sidelights") in the form of a matched pair comprising a left-hand sidelight and a right-hand sidelight, i.e. two bent glass sheets, for each window along one side of the vehicle. Furthermore, nearly all windscreens are laminated, i.e. made from two plies of glass and a ply of plastics interlayer material which bonds the glass plies together. Here again, it is the case that the bent glass sheets are required in pairs. It should also be noted that for increased security, laminated glass is being increasingly used in the back and side windows of vehicles, and so the requirement for pairs of bent glass sheets will likewise increase.

Bearing in mind the earlier comments relating to production costs, glass suppliers have sought (and continue to seek) a cost-effective way of meeting increased demand for pairs of bent glass sheets.

Some known glass bending processes rely upon the force of gravity to bend a glass sheet. For the bending processes of this category, which will be referred to as the "gravity bending processes", the bending force is by its nature omnipresent and hence available throughout the glass bending line, "for free" as it were. Consequently, a bending force is available to bend any number of glass sheets at the same time, and so, providing that other requirements such as provision of the correct temperature and shape control are satisfied, many sheets may undergo bending concurrently. Examples of gravity bending processes are the well-known sag bending process, in which a heat-softened glass sheets sags into conformity with an outline mould, and the gas hearth process, in which a heat-softened glass sheet is supported on a cushion of hot gas emanating from a curved hearth bed, the curvature of which is adopted by the glass sheet. For the gravity bending processes, it is generally a relatively straightforward matter (at least in theoretical terms) to design a glass bending line of increased output by lengthening the line, and including e.g. additional sag bending moulds or gas hearth beds.

However, in other known bending processes the bending force is provided at a cost by man-made equipment, generally located in a specific "bending station", and is therefore only available in that bending station. Hence the bending equipment can generally only bend one glass sheet at a time. These "non-gravity" bending processes are exemplified by press bending (in which a heat-softened glass sheet is pressed between complementary shaping surfaces), drop forming or impulse forming (in which a heat-softened glass sheet is dropped onto a shaping mould; note that although this involves gravity, extra equipment is required to bring about the drop), and vacuum forming or blow forming (in which a difference in gas pressure shapes the sheet). In these processes the bending force is exerted upon the glass sheets in addition to the force of gravity.

It is more difficult to increase the output of a glass bending line which employs one of these non-gravity bending processes. Since the bending station can generally only accommodate one sheet at a time, output depends on the cycle time attained (cycle time being the time which elapses between one sheet passing a particular point in the apparatus, and the next sheet passing the same point). Attempts to shorten the cycle time below the "natural" value for the process, e.g. by heating the glass sheet to a higher temperature, or increasing the bending force, tend to result in reduced optical quality and/or breakage of the sheet. The maximum output from a glass bending line which employs a non-gravity bending process therefore tends to be limited to a certain level per bending station. Attempts to bend glass sheets in superimposed pairs by non-gravity processes have not been commercially successful because of problems with the sheets sticking to each other.

Of course, one way of increasing output is simply to install a further complete bending line, thereby approximately doubling output. However, this has a very high capital cost, and approximately double running costs. In the past, a preferred solution has been to double the capacity of the line by doubling its width and providing a twin bending station, i.e. one capable of bending two glass sheets individually but approximately simultaneously. This is a cheaper option than installing another completely separate bending line. In a line with a twin bending station, two rows of glass sheets are heated in a common furnace and conveyed to the bending station on a common conveyor.

For instance, it is known from GB 2 197 282 (which corresponds to US 4,753,668) to press bend a pair of mutually symmetrical glass sheets such as automotive side window glass sheets simultaneously, but separately, with two pairs of mutually symmetrical pressing moulds. Similarly, WO 97/07066 discloses a press bending apparatus in which a so-called "double row" of side window glazings is shaped. As the specification itself states at page 27, lines 15-18, the double row configuration "adds significant production flexibility without a significant increase in the cost of the press bending apparatus", and this is why double row processing has been a preferred option for increasing the capacity of a glass bending line. Numerous other documents make reference to double row processing, e.g. EP 267 121 (corresponding to US 5,006,146), EP 523 016 (corresponding to US 5.336,288) and WO 95/16639 (corresponding to US 5,395,415).

However, this approach is not without its disadvantages. A major problem of double row processing is that a stoppage on one side of the line generally necessitates stopping the other side to allow work on the first side, leading to unnecessary downtime. Repair and maintenance work may be hampered by the difficulty of access to the middle of the line owing to the greater overall width of a double row processing line. Double row processing is also inefficient when a reduced volume of production is required. On those occasions when there is insufficient demand to run both sides of the line, it is still necessary to heat the entire furnace and run the full width of the conveying means, not to mention other equipment, even though glass is being processed on one side only. Clearly there is an increased production cost associated with glass thus produced. Moreover, there is very little flexibility in terms of the different parts that can be produced on the two sides at any one time. By "part", a specific glazing, e.g. a sidelight, rear window ("backlight") or windscreen ply, for a specific vehicle is meant, i.e. a particular pattern of window. Double row glass bending lines are greatly restricted in this aspect because both rows of sheets are heated in the same furnace, i.e. subjected to the same heating regime, whereas differing parts may require different heating regimes. Also, both rows of sheets are transferred into the bending station on the same conveying means, generally a set of rollers in which each roller spans the full width of the conveying means, and so it is not possible to accommodate different sizes of glass sheet in the two rows, or transfer them into the bending station at different times, as may be required for different parts. Similar considerations apply to the actuating means for the bending equipment, and to the conveying means which removes the sheets from the bending station.

EP 494 823 is of interest in this regard because it attempts to confer a single production line with the flexibility to make a variety of products. A branched line is provided, with the branch equipped to produce backlights, whereas the main part of the line produces sidelights. Both parts of the line are supplied with heat-softened glass sheets by a common furnace. While this arrangement ensures high utilisation of the furnace, it again suffers from the disadvantage that all the glass sheets are subjected to the same temperature regime, whether they are to be bent into sidelights or backlights. This precludes the use of heating regimes (e.g. including differential heating) which are tailored to a particular part, and which may verge on the essential for difficult parts. Furthermore this arrangement is not relevant to the production of bent and annealed glass sheets for laminating.

It would be desirable to provide a glass bending apparatus which has greater production capacity than a single line bending a single row of glass sheets, without compromising optical quality and/or accuracy of shape to reduce cycle time, and without accepting the constraints imposed by double row processing.

It has now been realised that, despite the view prevalent in the art, two specially configured glass bending lines can be arranged in a co-operative relationship, thereby surprisingly reducing the otherwise substantial additional costs of providing two lines.

According to the present invention, there is provided an apparatus for producing bent glass sheets, comprising a glass bending line which includes:
- a furnace for heating a glass sheet to a heat-softened condition,
- a bending station provided with bending equipment which bends the glass sheet to a desired curvature by subjecting it to a bending force additional to the force of gravity,
- a cooling station for cooling the glass sheet after bending it, and
- conveying means for conveying the glass sheet along the bending line,
characterised in that the apparatus also comprises a second such glass bending line adjacent the first, and the apparatus further comprises ancillary equipment which is shared between the two glass bending lines, and the lines are aligned in mutually spaced relationship, separated by a sufficient distance to allow operating personnel access between the glass bending lines, but positioned sufficiently close to each other to allow sharing of said ancillary equipment.

The invention relates to apparatus for the non-gravity category of bending processes described above. By providing separate glass bending lines, the disadvantages of double row processing are avoided, for example a stoppage on one line need not affect the other line. Where the two lines are producing the same part, additional flexibility for neighbouring upstream operations (e.g. pre-processing operations such as cutting and edge-grinding) and downstream operations (e.g. addition of ancillary non-glass components such as extrusions, mouldings or electrical terminals) becomes possible, thereby making them more efficient, because there is the option of these operations supplying to, or being supplied by, either of the glass bending lines, thereby reducing the effect of any differences in processing rate, e.g. due to stoppages.

Moreover, it becomes possible to process a much wider range of parts according to market demand. For example, the two lines could on the one hand be set up to process left and right hand sidelights for a certain vehicle, or, on the other hand, backlights for two different vehicles. This flexibility is made possible by the provision of separate furnaces able to adopt separate heating regimes, and separate bending stations in which separate tooling is installed (the tooling being the shaping equipment and related equipment, specific to a particular part, which is installed in the bending station).

An apparatus according to the invention has reduced capital and operating costs compared with two completely independent bending lines. Ancillary equipment such as control gear (e.g. for the operating systems for the furnace, bending and cooling stations), electrical supply apparatus, air compressors for pneumatic controls or fans (to supply air to the cooling stations) may be shared between the bending lines. Reduced manpower is required to operate the bending lines of the invention, again comparing with two completely independent lines, because the same personnel can operate both lines from a common control room, and any parts of the line requiring frequent manual intervention, such as the bending stations, are within easy access. In summary, the bending lines of the invention are not completely independent because ancillary equipment is common to both lines, but as the ancillary equipment is not specific to a particular part (i.e. does not have to be changed to make a different part), the lines do have operational independence.

The invention is equally advantageous for the production of bent glass sheets which are required in pairs of related shape, because of the high productivity attained when the lines operate in tandem. The pairs may be of the type where one bent glass sheet may be superimposed on the other (with both sheets generally horizontal) to form a nesting pair in which the edges of the upper bent glass sheet generally overlie the edges of the lower bent glass sheet so as to be virtually coincident in plan view, i.e. the sheets may be described as congruent. Congruent pairs of sheets are used for the manufacture of vehicle windscreens, for example.

Alternatively, the pairs may be of the type where one bent glass sheet is in effect a mirror image of the other, such as corresponding left-hand and right-hand vehicle side windows. Such sheets are said to be oppositely congruent. Preferably, the bending equipment provided in each of the bending stations is adapted for bending either congruent or oppositely congruent glass sheets.

The apparatus may be adapted to produce either tempered or annealed glass sheets. At present, vehicle side windows and rear windows (collectively known as "bodyglass") are generally tempered by quenching them. Windscreens, on the other hand, are generally laminated, and as mentioned above laminated glass is expected to be used increasingly for vehicle bodyglass. Accordingly, the cooling stations of the apparatus may be constructed and arranged either to quench the bent glass sheets and thereby temper them, or to cool the bent glass sheets gradually and thereby anneal them, as appropriate for the type of glass which the apparatus is designed to produce.

Indeed, the invention finds particular application in the bending and annealing of glass sheets for laminating, because two bent glass sheets are of necessity required for each laminated window produced. In the known gravity (sag) bending processes, it is normal practice to bend two congruent glass sheets simultaneously as a pair, one sheet superimposed upon the other. This is not generally possible with other bending techniques because of problems of sticking or smudging of any printed areas on the lower glass sheet, and because with some techniques it is not possible to apply the bending force to two glass sheets simultaneously. The invention is especially advantageous for the bending and annealing of glass sheets for laminating by one of these other bending techniques because it overcomes the inherent productivity limitation, compared with gravity bending, of bending sheets singly.

The two glass plies which, together with a ply of interlayer material, make up a standard automotive laminated window, are for convenience referred to as the inner and outer ply respectively, according to which of the plies forms the inner and outer surfaces of the window when installed in its intended position in a vehicle. Each ply has two major faces, and after lamination, the ply of interlayer material adheres to opposed major faces of the glass plies. For a laminated window of shallow curvature of large radius, it is acceptable for both plies to be the same size (referring to the size of the flat glass sheet as cut, which is then fed onto the bending line) and bent to the same curvature. Such plies need not be distinguished during bending, or, at any rate, the inner and outer plies can be bent on the same bending equipment on the same bending line if desired. However, modern windscreen designs frequently require the glass to possess deep or sharp (small radius) or complex curvature, or indeed most or all of these characteristics. To achieve reliable lamination without excessive breakage, it is important for the glass plies to nest together well, that is to say, the glass plies should fit together well when assembled, i.e. when superimposed in the correct order with a ply of interlayer material in between the glass plies. The plies will only nest accurately if the curvatures of their proximate opposed major faces match, after due allowance for the thickness of the interlayer. To put it another way, if one considers corresponding small portions of each of the glass plies (portions which are small enough for their curvature to be considered to be circular), the curvature of such portions needs to be concentric when they are adjacent each other in the assembled condition if they are to nest accurately. From a consideration of the geometry involved, it will be appreciated that one glass ply (for a windscreen, the inner ply) needs to be of slightly smaller size and bent to slightly smaller radii of curvature so that the plies nest accurately. The term "congruent pair", as herein employed, includes a pair comprising inner and outer plies of slightly different sizes as just described.

In the above situation, the apparatus of the present invention is advantageous because it is convenient for the first glass bending line to produce the bent glass sheet which forms one ply selected from the inner and outer plies, whereas the second glass bending line produces the bent glass sheet which forms the other of the inner and outer plies. In short, one line is dedicated to one ply, and the other line to the other ply. Where, as explained above, the inner and outer plies are of slightly different sizes and/or curvatures, this enables the bending equipment of each line to be constructed and arranged to bend the glass sheet being produced on that line to the exact curvature required for that bent glass sheet to form the inner or outer ply, as the case may be, of an accurately nesting pair.

Further advantages of the invention will become apparent from the following description of specific embodiments of the invention, these being given by way of illustration and not of limitation. The description is made with reference to the accompanying drawings in which:-
Fig. 1 is a schematic plan view of a bending apparatus according to a first embodiment of the invention;
Fig. 2 is a schematic plan view of a bending apparatus according to a second embodiment of the invention; and
Fig. 3 is a schematic cross-sectional view of a laminated window which may be produced on the apparatus of Fig. 2.

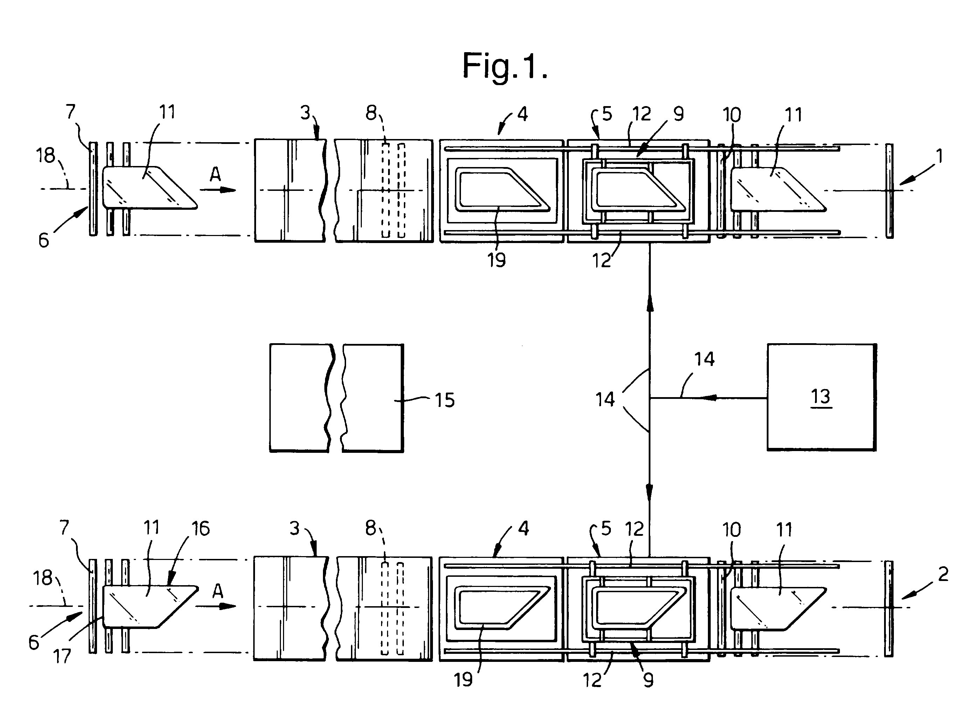

With reference to Figure 1, an apparatus for producing bent glass sheets is shown, comprising a first glass bending line 1 and an adjacent second glass bending line 2. Each line includes a furnace 3, a bending station 4 and a cooling station 5. A conveying means 6 for conveying glass sheets along the bending line generally in the direction of arrows A is also provided for each line; each conveying means comprises first, second, third and fourth parts. The first part 7 is a loading conveyor, preferably a roller conveyor, onto which glass sheets 11 are loaded at spaced intervals. The glass sheets are conveyed into the furnace 3, through which they advance on the second part of the conveying means, namely a furnace conveyor 8, which is preferably a roller hearth; alternatively a gas hearth could be used. The furnace conveyor delivers the heat-softened glass sheets into the bending station 4. The third part of the conveyor means is preferably a shuttle 9, which collects glass sheets from the bending station after they have been bent, conveys them through the cooling station 5, and delivers them to the fourth part of the conveying means, namely an unloading conveyor 10. Each shuttle runs on rails 12 which extend from within the bending station to the unloading conveyor. The unloading conveyor is again preferably a roller conveyor; however air flotation conveyors are an alternative possibility for any part of the conveying means 6.

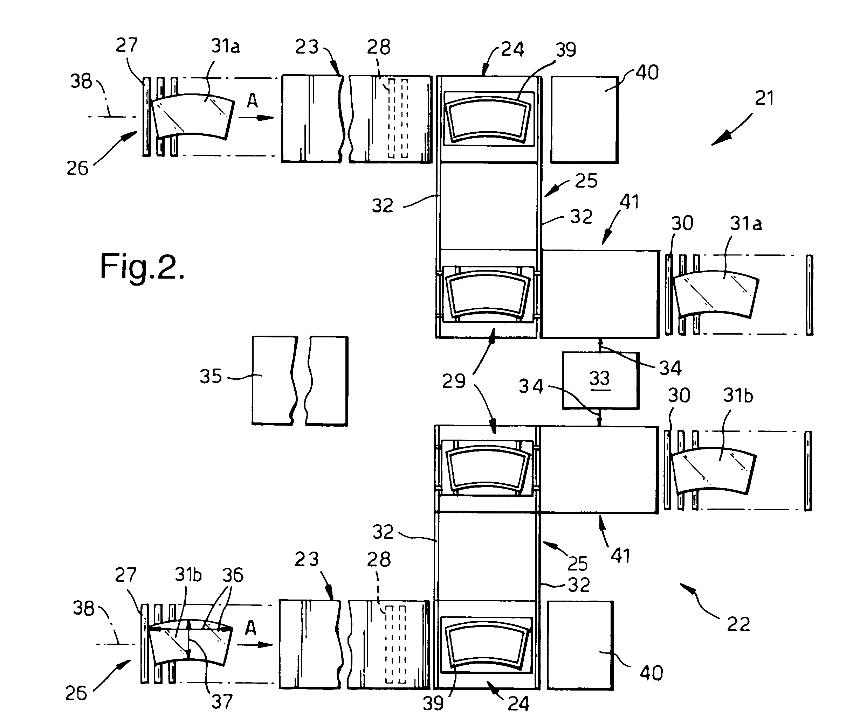

In the embodiment of Figure 1, the bending station 4 is provided with press bending equipment comprising an upper full face mould (not shown) and a lower press bending ring mould 19. The heat-softened glass sheet is accurately positioned on the ring mould and by closure of the two moulds is subjected to a pressing force which bends it to a desired curvature. The pressing force may be generated by means of a hydraulic or pneumatic cylinder, or electric servo motor, in each case actuating the closure of the moulds. The full face mould may be a vacuum mould, in which case differential air pressure across the sheet provides a further bending force. The apparatus of Figure 1 produces tempered glass sheets, and the cooling stations 5 are quench stations, in which the bent glass sheets are quenched by blasts of air, generally while being reciprocated by the shuttle. The air is supplied from one or more fans 13 through ducts 14. As is schematically indicated in the drawing, economies may be achieved by using a common fan or fans for the quench stations of both bending lines. Other ancillary equipment may similarly be shared between the bending lines, for example the control gear 15, electrical supply installations or compressors for hydraulic or pneumatic systems (not shown). In order to show all the major elements of the bending lines in the Figures without reducing the size of representation excessively, the furnaces 3 and bank of control gear 15 have been truncated in Fig. 1. The corresponding elements of Fig. 2 have also been truncated.

The glass sheets 11 depicted in Figure 1 are door glasses for the side door windows of cars, although any tempered part could be produced on either bending line. The door glasses are mirror images of each other, i.e. they are oppositely congruent, and they are required by the vehicle manufacturer in pairs (each pair comprising a left-hand and a right-hand glass), as are other side window glazings. Such parts have been made on bending apparatus employing double row processing, but as previously mentioned a stoppage on one side of such apparatus, e.g. connected with the bending equipment, necessitates stopping the other side as well, even if there is no fault on that side. This inefficiency does not arise with the apparatus of the present invention, for bending line 1 can continue to operate when bending line 2 has stopped, and vice versa. Glass sheet accumulators (not shown) are used to balance numbers of left-hand and right-hand parts. Furthermore, owing to the operational independence of the lines, the two lines may produce unrelated parts if required. The glass sheets 11 are fed into the furnace 3 in a continuous succession at spacings and velocities related to the cycle time.

The door glasses shown in Figure 1 are of elongated shape, and have a long axis parallel to the length 16 of the glass, and a short axis parallel to the width 17, the two axes being at right angles to each other. As can be seen, the glasses are conveyed with the short axis generally at right angles to the direction of conveyance. Apart from being advantageous for the stability and maintaining positional accuracy of the glass during conveyance, this orientation allows the line to be narrower than would otherwise be the case. This in turn allows significant savings on the capital cost of each bending line. Keeping other factors equal, it has been found that the cost of a bending line does not vary directly with its width; on the contrary, it is apparently proportional to a higher power of the width. For example, in a double row processing line the conveying means is fitted with much longer rollers in order to span the extra width, and such longer rollers also need to be of greater diameter to be sufficiently stiff and avoid excessive vibration during rotation. The greater diameter adds considerably to the cost of each roller, and this in turn means that the roller drive mechanisms have to be upgraded. As all these larger components are of course much heavier than the corresponding components of a narrow line, the framework and general structure of the line has to be rather more substantial as well, considerably increasing the cost of a double row line. As a result, the cost of two narrow bending lines in fact compares favourably with that of a line for double row processing.

Depending on the size of the parts to be made, the width of a line may be restricted to less than 1.5 m, or less than 1.3 m, or even less than 1.2 m, to reduce the cost. References to the width of a line are references to the width of the conveying means which is able to receive and support glass sheets, i.e. the usable width. For example, the rollers of a roller conveyor together define a surface which is tangential to the upper surface of the rollers, the width of the surface being equal to the usable length of the rollers. This surface is what is meant in the case of a roller conveyor when the surface of the conveying means is referred to.

Another advantage of a narrow line is that it facilitates access for operators and maintenance personnel, as even the centre of the line can easily be reached from the sides, unlike a line which is wide enough for double row processing. The two lines are also set sufficiently far apart to allow personnel access between the lines, say, at least I metre, preferably 2 metres, apart. In practice, to allow increased efficiency of operation, it is preferable to set the lines far enough apart to allow access for mobile equipment such as factory vehicles, e.g. fork lift trucks and stacking trucks. A particularly preferred spacing is therefore 3 metres or thereabouts. It is undesirable to set the lines so far apart that valuable factory space is wasted, and sharing of ancillary equipment becomes difficult and/or expensive to arrange. For example, it is undesirable to supply cooling air from fans through excessively long ducts, as larger and more expensive fans are required to compensate for the pressure losses in the ducts. Ducts over 50 m long are undesirable, and ducts over 100 in are best avoided. Consequently the lines are preferably set less than 200 m, more preferably less than 100 m and most preferably less than 50 m apart.

The arrangement of the two bending lines may be symmetrical in plan view, as shown in Figure 1, but need not be. Similarly, it is usually convenient for the two lines to be parallel, but this is not essential, and local requirements may override in certain circumstances. In Figure 1, the centreline of each bending line is indicated by reference numeral 18.

Figure 2 illustrates a glass bending apparatus in accordance with a second embodiment of the invention. Again, the apparatus comprises a first bending line 21 and a second bending line 22. Many parts of the lines are similar, equivalent or identical to the corresponding parts in the first embodiment, and these parts will not be described again in detail. Such parts include the furnaces 23, bending stations 24, conveying means 26, loading conveyors 27, furnace conveyors 28, unloading conveyors 30, control gear 35 and centrelines 38.

An important difference between the two embodiments is that the Figure 2 embodiment is constructed and arranged to produce annealed glass sheets to be laminated together, for example to form a windscreen. Consequently the cooling stations 25 are no longer equipped to quench the bent glass sheets. On the contrary, the annealing process starts in the bending station 24, and continues as the sheets 31 cool gradually while they are conveyed through the cooling station 25 on the shuttle, the cooling rate being slow enough to avoid the generation of toughening stresses in the glass. Instead, much lower compressive stresses are generated in the peripheral region of the sheets to allow handling of the sheets without excessive breakage. Because cooling is slower, more space is needed for it to occur, and so an additional cooling station 41 is provided in each line to continue the gradual cooling process, until the sheet is cool enough to be unloaded. The unloading conveyor 30 may be extended back through the additional cooling station 41 and under the shuttle rails 32 to provide transport for the sheet. By the time the sheet has reached the additional cooling station 41, its temperature has fallen below the glass transition temperature (below which permanent stresses can no longer be thermally induced in the glass), and so it is acceptable to employ forced cooling to cool the sheet more quickly. Accordingly, cooling air fans 33 are provided, and shared between the lines, supplying air through ducts 34.

As mentioned earlier, it is known to bend a pair of glass sheet simultaneously, one on top of the other, by gravity bending, and this process has long been used for bending two glass plies which are then laminated together to form a windscreen. However, in gravity bending, the glass sheets are only supported around their periphery, and consequently it is impossible to control the precise shape of the bent glass sheets accurately in non-peripheral areas. Press bending, in which a heat-softened glass sheet is shaped by pressing it between complementary opposed shaping surfaces provided on press members in the form of moulds, is able to overcome this deficiency because one of the press members, normally the upper one, may be a full face press member, i.e. a continuous press member that extends over a complete major face of the glass sheet to be bent. Unfortunately, due to the sticking and smudging problems described earlier, with press bending only one glass sheet can be pressed at a time, i.e. the two plies of glass have to be bent separately. This places a constraint on the level of productivity which a single press bending station is able to attain, and is a constraint which does not apply to gravity bending. The present invention is therefore particularly advantageous for press bending and annealing glass sheets to be laminated, as it allows the full surface shape control of press bending (particularly advantageous for complex shapes) to be achieved with at least the same productivity as gravity bending. Bending station 24 is therefore preferably a press bending station comprising a press which includes press members, actuators, control gear, etc, but only the press ring 39 is shown for clarity.

The need for accurate nesting of plies has already been described. With two bending lines, it is possible, indeed desirable, to arrange for one line to be dedicated to, say, glass sheets intended to be inner plies, and the other line to be dedicated to, in that case, glass sheets intended to be outer plies. The bending equipment is then constructed and arranged to bend the glass sheets constituting the inner and outer plies respectively to slightly different curvatures, which are chosen to achieve accurate nesting of the plies. This may involve providing slightly differentially shaped tooling in the two bending stations, or modifying the shape of the bent glass sheets, i.e. performing an auxiliary shaping step, while the bent glass sheet is on the shuttle. The glass sheets designated 31a, destined to be inner plies, may be slightly smaller than the sheets designated 31b, destined to be outer plies, but this is not discernible in Figure 2.

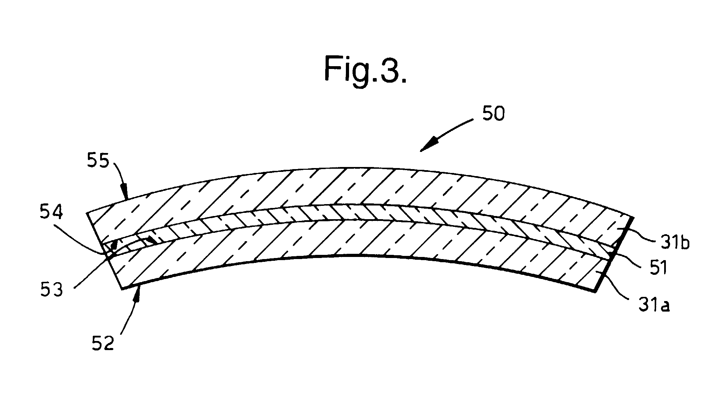

Figure 3 shows a laminated window 50 which may be produced from a congruent pair of bent glass sheets, comprising an inner ply 31a and an outer ply 31b, together with a ply of interlayer material 51. Inner ply 31a has major faces 52,53 and outer ply 31b has major faces 54,55, and the ply of interlayer material 51 adheres to the opposed major faces 53,54, i.e. those that form internal as opposed to external surfaces of the laminated window. It can be seen that inner ply 31a is slightly smaller, and of slightly greater curvature (i.e. has a smaller radius of curvature), than outer ply 31b to allow accurate nesting of the plies. The curvatures of the internal faces 53,54 match after allowing for the thickness of the intervening ply of interlayer material. Typically, the interlayer is 0.76 mm thick, although other thicknesses are available.

The embodiment of Figure 2 employs an arrangement for the shuttle 29 which is different from that of Figure 1. In both cases the shuttle reciprocates between the bending and cooling stations, but in the Figure 1 embodiment the movement of the shuttle is parallel to and in line with the direction of conveyance of glass sheets through the furnace, whereas in the Figure 2 embodiment, shuttle movement is at right angles to the direction of conveyance through the furnace. This different shuttle arrangement is not necessarily associated with the production of annealed bent glass sheets for laminating; the arrangement could equally well have been incorporated in the Figure 1 embodiment which produces tempered bent glass sheets. The arrangement of the shuttle 29 at right angles (which may be referred to as a "side exit shuttle") possesses certain advantages over the in-line arrangement of Figure 1. For instance, it complements the preferred orientation in which glass sheets for windscreens are conveyed, i.e. with their long axes 36 parallel to the direction of advancement, as described below. An in-line shuttle arrangement for this orientation of glass sheet would be excessively long, and hence prone to vibration or even up and down oscillation.

However, when door glasses are bent on a bending line with a side exit shuttle, it allows them to be conveyed through the furnace with their short axes parallel to the direction of advancement. This is also advantageous because in this orientation any distortion introduced by the rollers has less of an adverse effect on its appearance in reflected light, when the door glass is installed in a car. After being transferred by a side exit shuttle, the door glasses (which are generally of cylindrical curvature only) pass into the quench station with their long axes parallel to the direction of reciprocation of the shuttle through the quench station. This allows the blowing boxes (from which the blasts of quench air emanate) to be curved to a shape which follows the shape of the bent door glasses, reducing the distance which the blasts of quench air travel, and thereby increasing the efficiency of the quench.

Furthermore, a side exit shuttle also means that access to the bending stations 24 is available on two adjacent sides, which allows the tooling to be changed without withdrawing the press from the line, as on an in-line arrangement. This in turn permits the press to be accurately aligned with the furnace and then fixed in position, thereby contributing to accurate location of the heated glass sheets on the press ring and hence more accurate shaping. Moreover, should a problem occur with the bending equipment or the shuttle, preventing the bending of the heat-softened glass sheets and/or their removal from the bending station, the improved access to the bending station makes it possible to dispose of the unwanted glass sheets into a suitable receptacle or chute 40 by means of an extension of the furnace conveyor 28. In an in-line system, an unwanted accumulation of sheets could occur in an equivalent situation. In this design of shuttle, the shuttle rails 32 extend from within the bending station 24 to a point just before the additional cooling station 41, so that the shuttle 29 deposits bent glass sheets on the unloading conveyor 30.

The glass sheets 31a, 31b depicted in Figure 2 are again conveyed for the majority of their passage with their long axis 36 parallel to the direction of advancement along the bending line. It is clear, however, that while on the shuttle, the sheets move in a direction parallel to their short axis 37. Not only does this allow the lines to be narrower, as described earlier, but it may also improve the quality of the final product, namely a windscreen. With the increasing angle of rake of windscreens, a vehicle driver looks through the windscreen at an increasingly oblique angle, and any optical distortion caused by the windscreen is increasingly apparent. When the glass sheets are conveyed parallel to their long axis on rollers, any distortion resulting from the rollers is significantly less apparent than when the sheets are conveyed parallel to their short axis.

## Claims

1. An apparatus for producing bent glass sheets (11;31), comprising a glass bending line (1;21) which includes:
- a furnace (3;23) for heating a glass sheet to a heat-softened condition,
- a bending station (4;24) provided with bending equipment which bends the glass sheet to a desired curvature by subjecting it to a bending force additional to the force of gravity,
- a cooling station (5;25,41) for cooling the glass sheet after bending it, and
- conveying means (6;26) for conveying the glass sheet along the bending line,
characterised in that the apparatus also comprises a second glass bending line (2;22) adjacent the first, and the apparatus further comprises ancillary equipment (13,15;33,35) which is shared between the two glass bending lines, and the lines are aligned in mutually spaced relationship, separated by a sufficient distance to allow operating personnel access between the glass bending lines, but positioned sufficiently close to each other to allow sharing of said ancillary equipment.

2. An apparatus as claimed in claim 1, wherein the bending equipment provided in each of the bending stations (4;24) is adapted for bending either congruent or oppositely congruent glass sheets.

3. An apparatus as claimed in claim I or claim 2, wherein the cooling stations (5) are constructed and arranged to quench the bent glass sheets and thereby temper them.

4. An apparatus as claimed in claim 1 or claim 2, wherein the cooling stations (25,41) are constructed and arranged to cool the bent glass sheets gradually and thereby anneal them.

5. An apparatus as claimed in claim 4, wherein the bent glass sheets constitute the inner and outer plies (31a,31b) of a laminated window (50) to be formed subsequently and the first glass bending line (21) produces the bent glass sheet which forms one ply selected from the inner and outer plies, whereas the second glass bending line (22) produces the bent glass sheet which forms the other of the inner and outer plies.

6. An apparatus as claimed in claim 5, wherein the laminated window (50) comprises a ply of interlayer material (51) between the inner and outer plies (31a,31b) of glass, the interlayer material adhering to a major face (53,54) of each glass ply, and the bending equipment is constructed and arranged to bend the glass sheets constituting the inner and outer plies respectively to slightly different curvatures, the actual curvatures being selected so that the curvatures of the major faces match after allowing for the thickness of the intervening ply of interlayer material.

7. An apparatus as claimed in any preceding claim wherein the furnace (23) of at least one line is elongated and the glass sheets (31a,31b) are conveyed through the furnace in its direction of elongation, the bending equipment comprises a press bender and a reciprocating shuttle (29) for conveying the bent glass sheet from the press bender to the cooling station (41), and the direction of conveyance of the bent glass sheet by the shuttle is at right angles to the direction of conveyance of the glass sheets through the furnace.

8. An apparatus as claimed in any preceding claim, wherein on at least one bending line (1,2;21,22) the glass sheets (11;31) are of generally elongated shape, having a long axis (16;36) and a short axis (17,37), and the sheets are conveyed through the furnace oriented with their short axis generally at right angles to the direction of conveyance.

9. An apparatus as claimed in any preceding claim, wherein the conveying means (6;26) is less than 1.5 m wide.

10. An apparatus as claimed in claim 9, wherein the conveying means (6;26) is less than 1.3 m wide.

11. An apparatus as claimed in claim 10, wherein the conveying means (6;26) is less than 1.2 m wide.

12. An apparatus as claimed in any preceding claim, wherein the two bending lines (1,2;21,22) are arranged in generally symmetrical fashion.

13. An apparatus as claimed in any preceding claim, wherein the first and second glass bending lines are between 1 and 200 metres apart.

14. An apparatus as claimed in claim 13, wherein the lines (1,2; 21,22) are between 2 and 100 metres apart.
